# EUROPEAN PATENT APPLICATION

(11) **EP 1 619 830 A1**
(43) Date of publication of application: **25.01.2006**
(21) Application number: 04726413.0
(22) Date of filing: 08.04.2004
(51) Int. Cl.: H04L 12/26

(54) **A METHOD OF TESTING DIGITAL SUBSCRIBER LINE BROADBAND SERVICE**

(30) Priority: 08.04.2003 CN 03109394; 14.04.2003 CN 03110054
(71) Applicant: Huawei Technologies Co., Ltd., 518129 Longang District, Shenzehen (CN)
(72) Inventor: ZHANG, Hongyuan, Shenzhen, Guangdong 518129 (CN); ZHANG, Hao, Shenzhen, Guangdong 518129 (CN); LI, Dong, Shenzhen, Guangdong 518129 (CN); HUANG, Ming, Shenzhen, Guangdong 518129 (CN); PENG, Hu, Shenzhen, Guangdong 518129 (CN)
(74) Representative: Mounteney, Simon James
(86) International application number: PCT/CN2004/000326
(87) International publication number: WO 2004/091139

(57) **Abstract**

The present invention discloses a test method of digital subscriber line (DSL) broadband service applicable to tests of CO and CPE equipments in a DSL broadband service system. The method comprises: A) disconnecting the equipment to be tested from the equipments at the other end; B) connecting the equipment to be tested with a configured test board, simulating the other-end equipments of the equipment to be tested with the test board, and making at least one of the tests of activation handshake, ATM layer, and high-hierarchy protocols. With this method, the problem in testing of DSL lines and locating the failures thereof can be solved, thus working efficiency is improved and operation cost lowered.

## Description

### Field of the Technology

The present invention generally relates to the field of broadband service over digital subscriber line, and particularly, to a test method for broadband service over digital subscriber line.

### Background of the Invention

In the field of telecommunications, an operator provides a subscriber via a twisted pair with both broadband and narrow-band telecommunication services simultaneously, e.g. ADSL (Asymmetric Digital Subscriber Line) over POTS (Plain Ordinary Telephone Service), ADSL over ISDN (Integrated Service Digital Network), VDSL (Very High Digital Subscriber Line) over POTS, VDSL over ISDN, and G.SHDSL (Single-pair High-speed Digital Subscriber Line). Such applications have become quite common in the field. In this invention, ADSL, VDSL, and G.SHDSL are referred to as xDSL for the sake of simplicity.

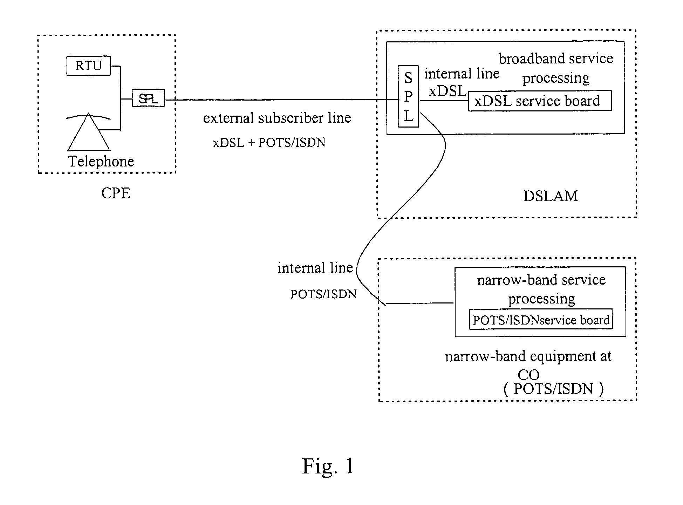

As shown in Figure 1, xDSL signals and POST/ISDN signals co-exist in one external subscriber line. At the side of Central Office (CO), a DSL Access Multiplexer (DSLAM), such as the Splitter (SPL) in a broadband CO equipment, separates broadband service from narrow-band service and distributes them to broadband service board (xDSL service board) and narrow-band service board (POTS/ISDN service board) for processing, respectively. At the side of Customer Premises Equipment (CPE), on the other hand, SPL in CPE distributes the separated broadband and narrow-band services to an xDSL Modem of Remote Terminal Unit (RTU) and a phone set, respectively.

When performing an xDSL service, xDSL service board at CO side and the xDSL Modem of RTU at the CPE side will firstly initiate a hand-shak process and establish the connection before transmission of digital data.

When it is impossible to initiate a hand-shaking process or to transmit digital data when performing xDSL services, how to locate the failure quickly, effectively, and accurately, especially how to decide quickly and accurately whether the xDSL service board works normally, has become an issue having a significant impact on the cost of operation and maintenance as well as the quality of service of the operator.

So far, starting as well as testing and maintaining an xDSL service rely primarily on experiences and on-site verification. There is no quick and reliable method for testing an external subscriber line to decide on such issues as whether this line is available to certain traffic, how much the bandwidth can be, what are the parameters of the line, whether CPE has been set normally, and etc. As a result, there are following drawbacks in the current approaches of test and maintenance:
(1) If the activation handshake process is not successful during test and maintenance, it is only possible to modify line parameters starting from CO to reduce the activation rate and lower the noise margin such that the line may be activated. This, however, cannot guarantee that there is no failure with CO or CPE. If the CO used has a failure, no activation handshake process will be successful while much effort has to be made to examine the external subscriber line and the settings of CPE; if it is CPE that has a failure, it will be difficult to find out, and only a replacement of CPE at the CPE side could be tried, which is again not easy to operate and maintain.
(2) When the activation handshake process is successful but the transmission of digital data fails, it is only possible to check the settings of Asynchronous Transfer Mode (ATM) layer of CO or CPE so as to decide whether there is data flow at the physical and ATM layers of a CO port or CPE port. As there is less means of maintenance for a CO port or CPE port to make decisions on the physical and ATM layers, higher maintenance cost and slow solutions to failures are resulted.
(3) When the ATM layer is found normal, as DSLAM deals with traffics up to the ATM layer only, it is impossible on DSLAM to check protocol encapsulations, to test IP, TCP, and other protocol layers above them, and to decide the real reason why CPE is unable to get accessed to an xDSL service. At present, the operator has to send maintenance personnel with abundant experiences for RTU to the customer premises while assigning personnel to operate equipments that support termination of layer 2 or layer 3 protocols, such as a Broad-band Access Server (BAS), at the CO side so as to cooperate with the trouble shooting, which leads to a high requirement on the capability of maintenance personnel as well as a high demand for the number of them. This has become a significant obstacle to the wide spread of broadband service over digital subscriber lines.

To sum up, there is so far in the prior art no good means in maintenance and test to find out the reason of a failure quickly if the activation handshake process cannot be completed or the digital data cannot be transferred during operation of an xDSL service. In particular, when the activation handshake process is unable to be completed, there is no way to decide whether it is a failure with CO or a failure with CPE, or even other failures, and it is often needed to call at the subscriber premises to make tests and locate defects. There is also the situation when the digital data can not be transferred after completing the activation handshake process, then it is impossible to decide whether it is a problem with CO or a problem with CPE, or even a problem with the subscriber's computer so that it is often necessary to carry out maintenance at the CPE side, which costs much time and effort, giving a negative impact on the service as well as cost control of the operator.

### Summary of the Invention

In view of the above, a test method for broadband service over a digital subscriber line is provided, by which the problem of testing and locating a failure on the digital subscriber line can be solved, work efficiency can be increased, and operating cost can be lowered.

The technical solution provided by this invention is as follows:

A test method of Digital Subscriber Line (DSL) broadband service for use in tests of Central Office (CO) equipments and Customer Premises Equipments (CPE) of a DSL broadband service system, comprises,
A. disconnecting the equipment to be tested from the equipments at the other end;
B. connecting the equipment to be tested with a configured test board, simulating the other-end equipment of the equipment to be tested through the test board, and making at least one of tests of activation handshake, Asynchronous Transfer Mode (ATM) layer, and high-hierarchy protocols on the equipment to be tested.

Wherein the said test board is configured as a broadband testing system used for simulating the CPE and/or CO equipment.

Wherein the said test board is configured as a Digital Subscriber Line Access Multiplexer (DSLAM) unit which is independence or part of CO equipment.

Wherein the said test board is configured as the CPE which is independence or part of the said CPE.

When the said equipment to be tested is the CPE, the said test of activation handshake in step B comprises:
B11. setting activation parameters in the test board, and initiating a handshake request with the equipment to be tested;
B12. the tested equipment and the test board operating each other, both entering a state of activation when mutually recognized standards for activation parameters are met, acquiring actual activation parameters, and verifying whether an activation function and related parameters of the tested equipment are normal.

When the said equipment to be tested is CO equipment, the said test of activation handshake in step B comprises:
B21. setting activation parameters in the test board, and initiating a handshake request with the test board;
B22. the tested equipment and the test board operating each other, both entering a state of activation when mutually recognized standards for activation parameters are met, acquiring actual activation parameters, and verifying whether an activation function and related parameters of the tested equipment are normal.

When the said equipment to be tested is the CPE, the said test of ATM layer in step B comprises:
B31. looping back a permanent virtual channel (PVC) or permanent virtual path (PVP) to be tested in the DSL broadband service system;
B32. the tested equipment sending, by itself or controlled by the test board via an embedded operation channel (EOC), an ATM cell based on PVC or PVP;
B33. the tested equipment deciding whether the channel between a loop-back point and the CPE is normal according to whether the tested equipment receives the ATM cell it has sent.

When the said equipment to be tested is the CPE, the said test of ATM layer in step B comprises:
B41. the test board sending to an upper level network in the DSL broadband service system a constructed ATM cell, which the upper level network loops back;
B42. the test board receiving the ATM cell being looped back via the upper level network;
B43. the test board deciding whether a channel between a loop-back point and the test board is normal based on whether it receives the cell being looped back.

Preferably, the said test of high-hierarchy protocols in step B comprises: performing at least one of the tests of ATM layer encapsulation protocol, and/or dynamic host configuration protocol (DHCP), and/or the tested equipment supporting point-to-point protocol, Ping initiated by the tested equipment, Ping initiated by the test board, and file transfer protocol (FTP).

Preferably, the said test of ATM layer encapsulation protocol comprises,
B511. the test board constructing an IP message or a message of the media access control (MAC) layer and sending the message to the tested equipment via an embedded operation channel (EOC);
B512. the tested equipment checking whether it has received the message, if it has received the message, reporting the message to the test board via a management system of the tested equipment;
B513. the test board comparing the message sent with the message received, deciding whether the message has been sent normally and whether the content is correct to decide whether configuration and function of the encapsulation protocol of the tested equipment are correct.

Preferably, when the said tested equipment is the CPE, the test of DHCP comprises,
B621. the tested equipment, controlled by a management system of the CPE, initiating to the test board a DHCP request;
B622. the test board assigning an IP address for the tested equipment and checking whether what the tested equipment reports is the obtained IP address to decide whether configuration and function of DHCP are correct.

When the said tested equipment is the CO equipment, the test of DHCP comprises,
B721. the test board initiating to the tested equipment a DHCP request;
B722. the tested equipment assigning an IP address for the test board, and the test board checking whether what the test board reports by itself is the obtained IP address to decide whether configuration and function of DHCP are correct.

Preferably, wherein the said test of tested equipment supporting point-to-point protocol comprises, a test of tested equipment supporting point-to-point protocol over ATM (PPPOA) and/or test of tested equipment supporting point-to-point protocol over Ethernet (PPPOE).

When the said tested equipment is CPE, the said test of tested equipment supporting point-to-point protocol comprises,
B831. configuring the test board as a server supporting point-to-point protocol, and configuring the tested equipment as a client supporting point-to-point protocol;
B832. the tested equipment accessing the test board by dialing in the mode of point-to-point protocol;
B833. the test board monitoring each process at the server as well as each process at the client;
B834. the test board deciding whether configuration and function of point-to-point protocol are correct by checking various states of the server and client.

When the said tested equipment is CO equipment, the said test of tested equipment supporting point-to-point protocol comprises,
B931.configuring the tested equipment as a server supporting point-to-point protocol, and configuring the test board as a client supporting point-to-point protocol;
B932. the test board accessing the tested equipment by dialing in the mode of point-to-point protocol;
B933. the tested equipment monitoring each process at the server as well as each process at the client and reporting the monitored states to the test board;
B934. the test board deciding whether configuration and function of point-to-point protocol are correct by checking various states of the server and client.

When the said tested equipment is the CPE, the said test of initiated Ping comprises,
B1041. the tested equipment obtaining an IP address;
B1042. the test board issuing via an embedded operation channel IP parameters to the tested equipment;
B1043. the tested equipment performing a Ping test of the test board based on the IP parameters and sending test results to the test board, which decides whether the IP layer is normal according to the test results.

When the said tested equipment is CO equipment, the said test of initiated Ping comprises,
B1141. the test board being configured with an IP address;
B1142. the tested equipment issuing via an embedded operation channel IP parameters to the test board;
B1143. the test board performing a Ping test of the tested equipment based on the IP parameters and obtaining test results, by which the test board decides whether the IP layer is normal.

When the tested equipment is the CPE, the said test of FTP comprises,
B1251. the tested equipment obtaining an IP address;
B1252. the test board simulating an FTP server to issue an IP address and FTP parameters to the tested equipment;
B1253. the tested equipment uploading and downloading files via the simulated server;
B1254. the test board obtaining uploading and downloading rates in the simulating test and comparing them with actually activated rates to decide whether service bandwidth of the subscriber is normal.

When the tested equipment is the CO equipment, the said test of FTP comprises,
B1351. the test board being configured with an IP address;
B1352. the tested equipment simulating an FTP server to issue an IP address and FTP parameters to the test board;
B1353. the test board uploading and downloading files via the simulated server;
B1354. the test board obtaining uploading and downloading rates in the simulating test and comparing them with the actually activated rates to decide whether service bandwidth of the subscriber is normal.

The said disconnecting the equipment to be tested from the equipments at the other end in step A comprises, disconnecting from a relay in the equipments at the other end through a relay in the tested equipment; and
the said connecting the equipment to be tested with a configured test board in step B comprises, connecting a relay in the equipment to be tested with a relay on the configured test board.

Step of connecting the relay in the equipment to be tested with the relay on the configured test board comprises, the relay in the equipment to be tested and the relay on the test board connecting the equipment to be tested and the test board with a first bus, respectively. The said first bus is an original bus.

The said connecting the relay in the equipment to be tested with the relay on the configured test board comprises, connecting the equipment to be tested with a first bus through the relay in the equipment to be tested, connecting the test board with a second bus through the relay on the test board, and short-circuiting the first and second buses.

The said first bus is an original bus, and the said second bus is a new one currently configured.

The said test board is configured to connect with a port of the xDSL board, and the test board and the port of the xDSL board jointly simulate CO or CPE equipment.

This invention configures a test board in advance, which can simulate CO or CPE. According to the method of this invention, first the external subscriber line between CO and CPE is disconnected, then the test board simulating CO is connected with CPE or the test board simulating CPE is connected with CO, and the line activation test of xDSL, simulating test of the physical layer, and simulating tests of high-hierarchy protocols are carried out for CPE or CO, respectively. Thus failures can be analyzed and located easily and solutions are found quickly. In other words, the method provided by this invention presents a solution to the test of digital subscriber lines and location of failures thereof, improving the work efficiency and lowering the operation cost.

### Brief Description of the Drawings

Figure 1 is a schematic diagram which illustrates a system in the prior art providing both broadband and narrow-band telecommunications services.
Figure 2 is a schematic which illustrates the CO test in embodiment 1 of this invention.
Figure 3 is the main flowchart of test in embodiment 1.
Figure 3A is the flowchart of activation test by simulating CO.
Figure 3B is the flowchart of ATM layer test.
Figure 3C is the flowchart of test supporting PPPOA and PPPOE by simulating CO.
Figure 3D is the flowchart of Ping test initiated by subscriber.
Figure 3E is the flowchart of FTP test.
Figure 4 is a schematic which illustrates the CPE test in embodiment 2 of this invention.
Figure 5 is the main flowchart of test in embodiment 2.
Figure 5A is the flowchart of CPE activation test.
Figure 5B is the flowchart of ATM layer test.
Figure 5C is the flowchart of test supporting PPPOA and PPPOE by simulating remote end.
Figure 5D is the flowchart of FTP test.
Figure 6 is a schematic which illustrates the test board constructed by the service board and CO.
Figures 7-12 are schematics which illustrate specific embodiments of this invention where a test board simulating CO is connected with CPE or a test board simulating CPE is connected with CO.

### Embodiments of the Invention

The present invention is hereinafter described in detail with reference to the accompanying drawings.

According to embodiments of this invention, a test board is pre-configured for testing a digital subscriber line and locating failures, and a broadband testing system (BTS) is configured on the test board for simulating CO or CPE.

### Embodiment 1:

In this embodiment, a test board is configured to simulate CO. The test board replaces the simulated CO, connects with CPE, and carries out such operations as setting and obtaining activation parameters, performance statistics, warning statistics, detecting the arrival of threshold values, locating CPE and checking whether the external subscriber line works normally. Through the test board, simulating tests of cell layer and ATM layer cell channel, tests of ATM encapsulation protocols for Ethernet/IP, tests of Ping, simulating tests of PPPOA or PPPOE, or/and simulating tests of FTP servers can be conducted so as to verify the settings of CPE and computers bearing CPE.

This embodiment is now described by an example using the ADSL board as the xDSL service board in CO.

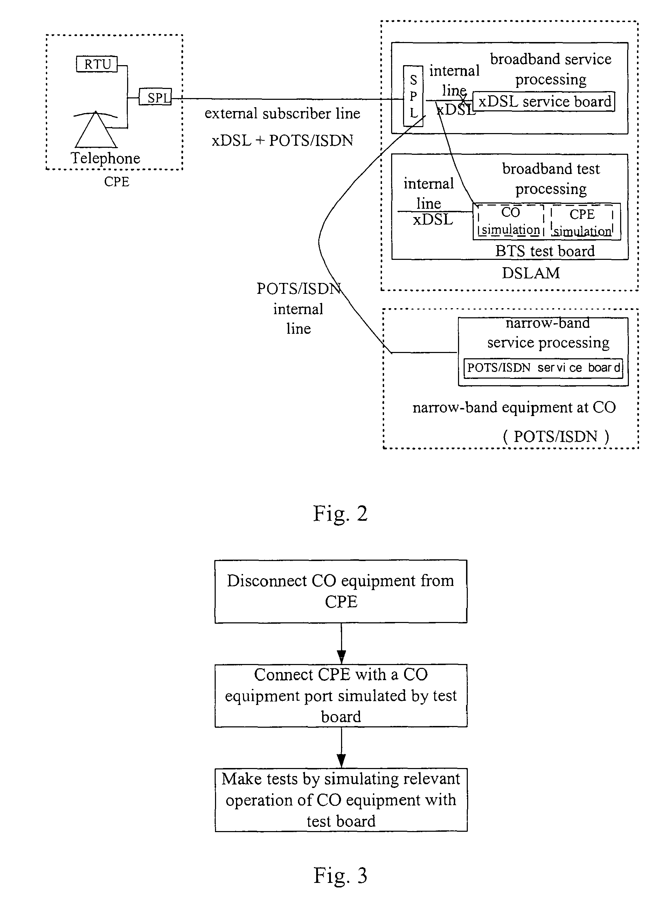

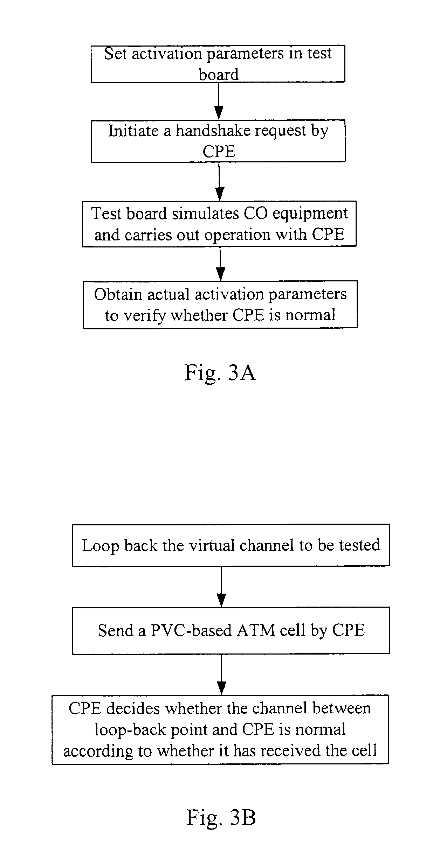

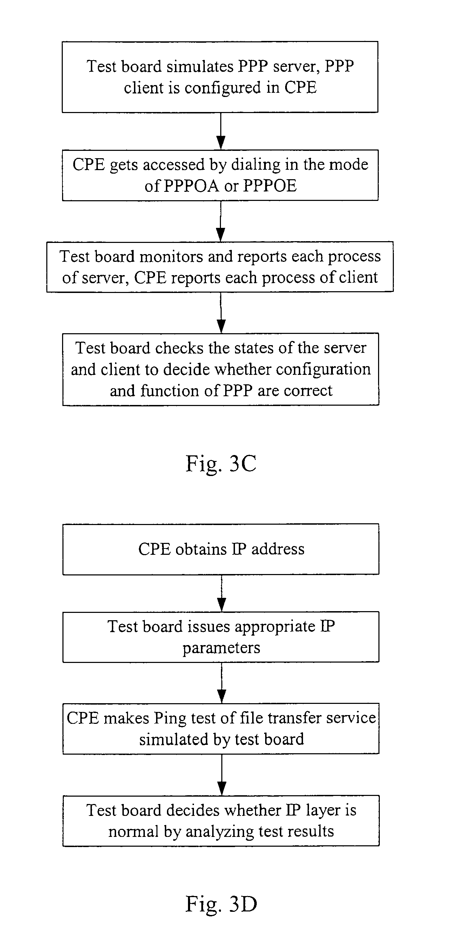

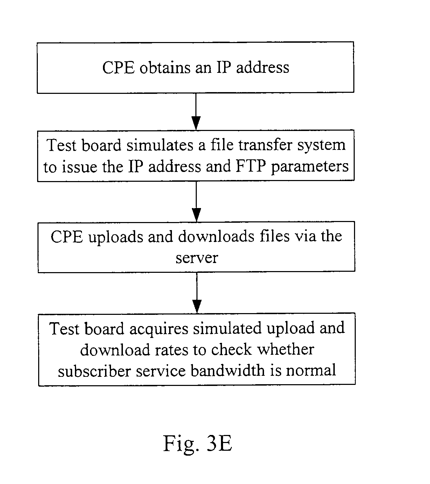

Refer to Figure 2 and Figure 3, the switchover is carried out by the network management or the hosts administrating the ADSL service via a control relay or subscriber line switchover matrix (referred to hereinafter as relay). CPE is disconnected from the CO port to which it connected and instead is connected to the simulated CO port on the test board. Then BTS on the test board simulates the proper operations of CO to make tests and diagnosis as well as simulating tests of physical layer and protocol layer for the external subscriber lines and CPE. The process of the test board simulating CO is described in detail as follows.

### A. Test of activation handshake process of CO, referring to the flowchart of Figure 3A.

By switchover of the relay, CPE is connected with the simulated CO interface on the test board. The activation parameters of ADSL in line are set and obtained with the definitions in relevant sections of RFC2662 MIB. The primary activation parameters include: line operating mode, channel mode, delay of upstream and downstream interleaving channel (or interleaving degree of upstream and downstream), target noise margin for upstream and downstream, and maximum and minimum rates of upstream and downstream, and etc. The handshake is initiated by CPE, then the two sides operate each other based on the activation parameters set on the test board; after that, both enter the activated state when the standards of activation parameters mutually recognized are met; finally, the actual parameters for activation can be obtained. Meanwhile, performance statistics, warning statistics, setting of thresholds, submission of reached thresholds, verification of the actually activated functions of CPE and the currently activated parameters, and examination of the line can be carried out for the external subscriber line, and the most appropriate settings of activation parameters can be obtained for the tested subscriber line.

### B. Test of ATM layer, referring to the flowchart of Figure 3B.

The ATM layer test can be carried out for CPE which is accessed via ADSL/SHDSL based on ATM technique.

The test of ATM connected with the operation, administration and maintenance (OAM) layer can be carried out for the services configured on CPE. The test board loops back to itself via the permanent virtual channel (PVC) or permanent virtual path (PVP) to be tested. CPE sends, by itself or controlled by the test board via an embedded operation channel (EOC), a PVC-based ATM cell, and then receives the cell. CPE decides whether the channel between it and the test board works normally according to whether it receives the PVC cell it has sent.

Under the condition that it is sure nothing is wrong with the CO and CPE cell layer that is simulated, constructed ATM cells can be sent by the test board itself, not via CPE, to upper layer network of DSL broadband service system. The cell loops back via the upper layer network and is received by the test board, which will, according to whether it receives the PVC cell it has sent, decide whether the channel between the loop-back point in the upper layer network and the test board is normal and where the broken point for abnormal loop-back is located.

The ATM layer test includes the test of F4/F5 OAM, which primarily is loop-back test and continuity check, so as to ensure the upper layer network as well as the configuration and function of the ATM layer at CPE are normal. Usually, CPE is configured to support the complete F4/F5 OAM, the F4/F5 OAM operation is initiated on the test board and results of the operation are obtained there.

### C. Simulating tests of high-hierarchy protocols.

(1) The test of ATM layer encapsulation protocol may be carried out for CPE which is accessed via ADSL/SHDSL based on ATM technique. The test board is configured in the proper mode of IPoA/1483B/1483R/PPPoA depending on the configurations of the DSL broadband service system and CPE. The test board constructs an IP message or an MAC-layer message and sends it to CPE which will check whether it receives the message. If receiving the message, CPE will report it to the test board which compares the sent message with the received message to decide whether the message has been sent normally and whether the content is correct. In this way, the configuration and function of encapsulation protocol of CPE can be checked.
(2) Test of DHCP. A DHCP server is configured in the test board and a DHCP client is built in CPE. Via EOC, the test board controls CPE to initiate a DHCP request and the DHCP server configured in the test board assigns an IP address for CPE. Then the configuration and function of DHCP can be checked according to whether CPE has acquired an IP address.
(3) Test of PPPOA or/and PPPOE, referring to Figure 3C. The test board simulates a PPPOA/OE server and a PPP client is configured in CPE. The test board controls, via EOC, CPE to access by dialing in the PPPOE or PPPOA mode and CPE reports each process of the PPP client to the test board. The test board acquires PPP packets and makes analysis of the packets as well as the data link parameters negotiated during the Link Control Protocol (LCP) and the Network Control Protocol (NCP), such as size of a PPP packet, authentication protocol used, head compressing options and etc. The test board also decides whether the configuration and function of PPP works normally by checking the negotiated states of CPE and the test board.
   When CPE supports PPPOA, PPPOA will be adopted to make the simulating tests; when CPE supports PPPOE, PPPOE will be adopted to make the simulating tests.
(4) Test of Ping initiated by CPE, referring to Figure 3D: After CPE obtains an IP address by way of DHCP, statically configured IP, or PPP, or EOC, the test board sends appropriate IP parameters via EOC, controls CPE to make a Ping test for the FTP server of the test board, and acquires, via the management system of CPE, the results of the Ping test reported by CPE as well as the message sent by CPE and the message received. The test board also decides whether the IP layer works normally by analyzing the results of Ping test according to the received message.
(5) Test of Ping initiated by the test board: After CPE obtains an IP address by way of DHCP, statically configured IP, or PPP, or EOC, the test board makes a Ping test of CPE based on the IP address acquired. The test board, according to the message sent by the test board and the CPE-received message acquired through the CPE management system, makes analysis of the results of the Ping test to decide whether the IP layer works normally.
(6) Test of FTP, referring to Figure 3D: After CPE obtains an IP address by way of DHCP, statically configured IP, or PPP, or EOC, the test board simulates the function of an FTP server and issues the IP address and FTP parameters (any subscriber's name and password) of the FTP server simulated by the test board. CPE uploads and downloads FTP files from the FTP server simulated by the test board in BINARY and ASCII modes through the FTP client configured in CPE. The test board acquires the upload and download rates of the simulating tests, compares them with the actual activated rates of upload and download, and check whether the upload and download rates of the simulating tests are matched with the currently activated rates and whether the subscriber's service bandwidth is normal.

### Embodiment 2:

In this embodiment, a test board is configured to simulate CPE. The test board replaces the simulated CPE, connects with CO, and carries out such operations as activation, submission of activation parameters, performance statistics, warning submission, detecting arrival of threshold values, locating CO and checking whether the external subscriber line works normally. Through the test board, simulating tests of the cell layer and ATM layer channel, tests of ATM encapsulation protocol for Ethernet/IP, tests of Ping, simulating tests of PPPOA or PPPOE, and/or simulating tests of FTP download can be constructed and initiated so as to verify the settings of upper layer network.

This embodiment is described below by an example using the ADSL board as the xDSL service board in CO.

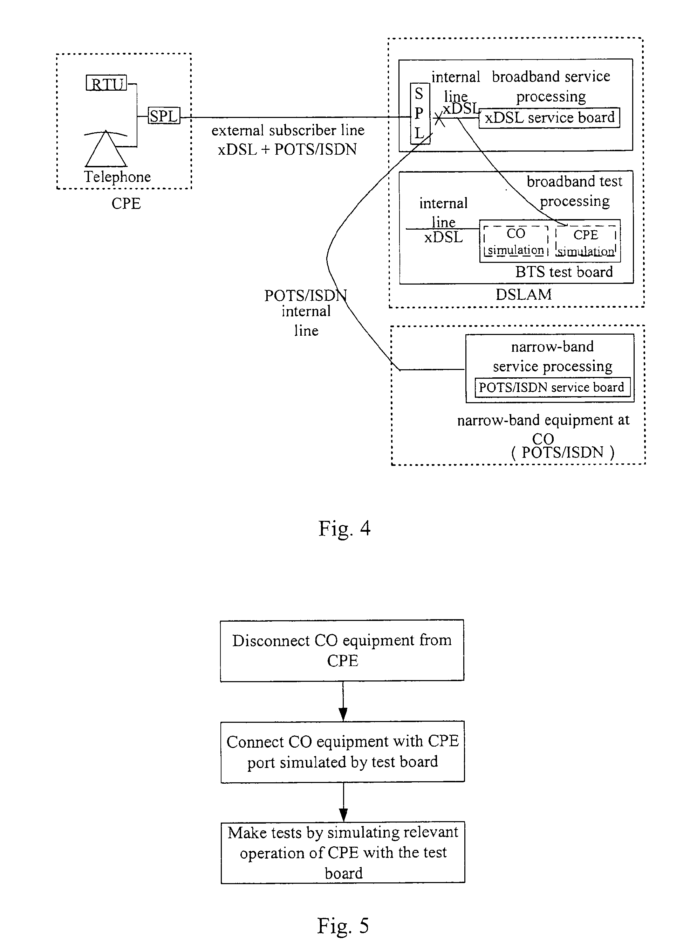

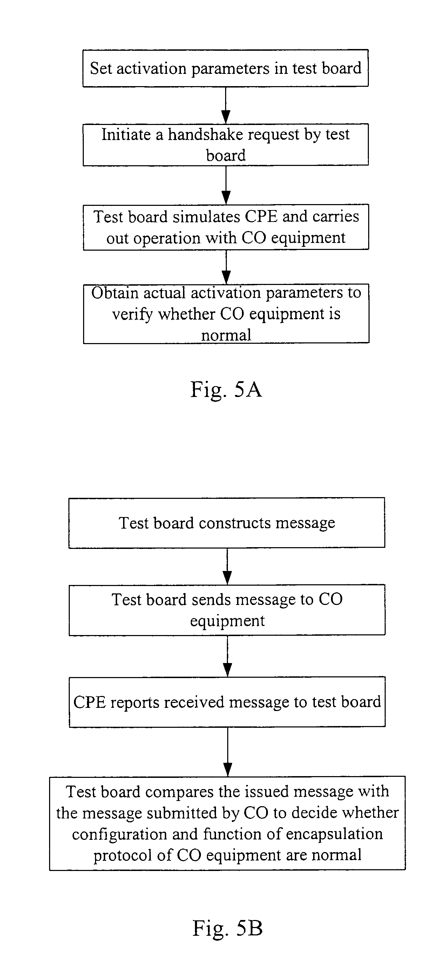

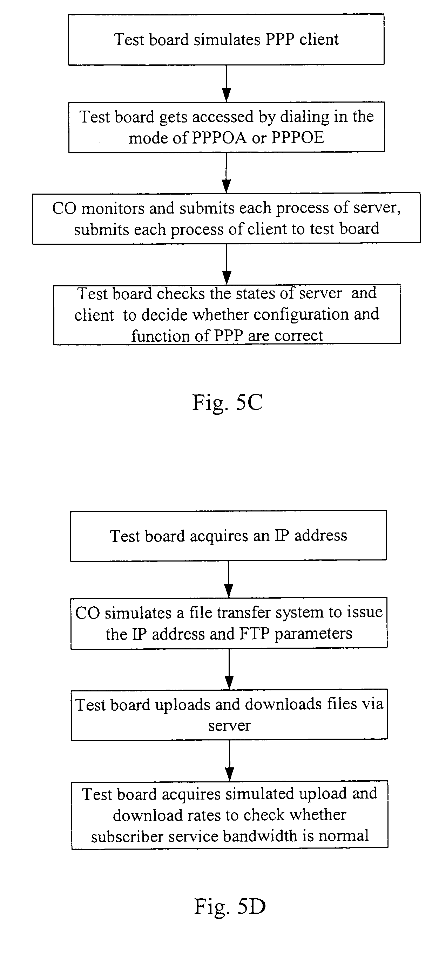

Referring to Figure 4 and Figure 5, the switchover is carried out by the network management or hosts administrating the ADSL service via relays, CPE is disconnected from the CO port, and CO is instead connected to the simulated CPE port on the test board. Then BTS on the test board simulates proper operations and tests of CPE, and makes simulating tests of physical layer and protocol layer for the external subscriber lines and CO. The process of the test board simulating CPE is described in detail as follows.

### A. Test of activation handshake process of CPE, referring to Figure 5A.

By switchover of the relay, the actual CO is connected with the simulated CPE interface on the test board. The activation parameters of ADSL are set and obtained. The primary activation parameters include: activation mode, transmitting gain and receiving gain of CPE, deviation of target noise margin, and maximum number of bit per tone. By connecting with the actual service port of CO, the BTS simulates CPE and initiates a handshake request. Then both CO and the BTS of the test board operate each other and enter the activated state when the standards of activation parameters mutually recognized are met, and the actual parameters for activation are obtained from the test board and reported so that the activation function of the actual CO port is checked.

### B. Simulating tests of high-hierarchy protocols

(1) Referring to Figure 5B, the test of ATM layer encapsulation protocol may be carried out for CO accessed via ADSL/SHDSL based on ATM technique. The test board is configured in the proper mode of EPoA/1483B/1483R/PPPoA depending on the configurations of the DSL broadband service system and CO. The test board constructs an IP message or an MAC-layer message and sends it to the CO side, i.e. the equipment terminating ATM layer at the CO side, for example, BAS set in DSLAM. The CO side checks whether it receives the message, if yes, reports the message to the test board, which compares the message constructed in advance with the message reported by the CO side to decide whether the message has been sent normally and whether the content is correct. In this way, the configuration and function of encapsulation protocol at the CO side can be checked.
(2) Test of DHCP: A DHCP client is configured in the test board. The test board requests the DHCP server at the CO side for an IP address, determines the test result according to the obtained address, and accordingly, decides whether the configuration and function of DHCP server at the CO side is normal.
(3) Test of PPPOA or/and PPPOE, referring to Figure 5C: The test board is configured with a PPP client and accessed to CO by dialing in the PPPOE or PPPOA mode. CO monitors each process and state of the PPP client and reports them to the test board. The test board acquires PPP packets and makes analysis of the packets as well as the data link parameters negotiated during the Link Control Protocol (LCP) and the Network Control Protocol (NCP), such as size of a PPP packet, authentication protocol used, head compressing options, and etc. The test board also decides whether the configuration and function of PPP works normally by checking the negotiated states of CO and the test board.
(4) Test of Ping initiated by the test board: After obtaining an IP address by way of DHCP, statically configured IP, or PPP, or EOC, the test board makes a Ping test for the CO of the IP address acquired. The test board makes analysis of the results of the Ping test as well as the messages sent and received so as to decide whether the IP layer works normally.
(5) Test of FTP, referring to Figure 5D: After an IP address is obtained by way of DHCP, statically configured IP, or PPP, the DSLAM management channel controls the test board, and CO issues the IP address of FTP server and FTP parameters, for instance, the subscriber's name and password to the test board. The test board uploads and downloads FTP files from the FTP server in CO in BINARY and ASCII modes through the FTP client configured in it. The test board acquires the upload and download rates of the simulating tests, compares them with the actual activation parameters as well as the rates of upload and download, and checks whether the upload and download rates of the simulating tests are matched with the currently activated rates and whether the subscriber's service bandwidth is normal.

Although embodiments 1 and 2 mentioned above are described by taking ADSL as an example, the method provided by this invention is applicable to simulating tests of high-hierarchy protocols of DSL of various kinds. Tests of physical layer and activation for other kinds of DSL can be conducted in line with the appropriate characteristics thereof while test solutions to high-hierarchy protocol layers are the same as described for these embodiments.

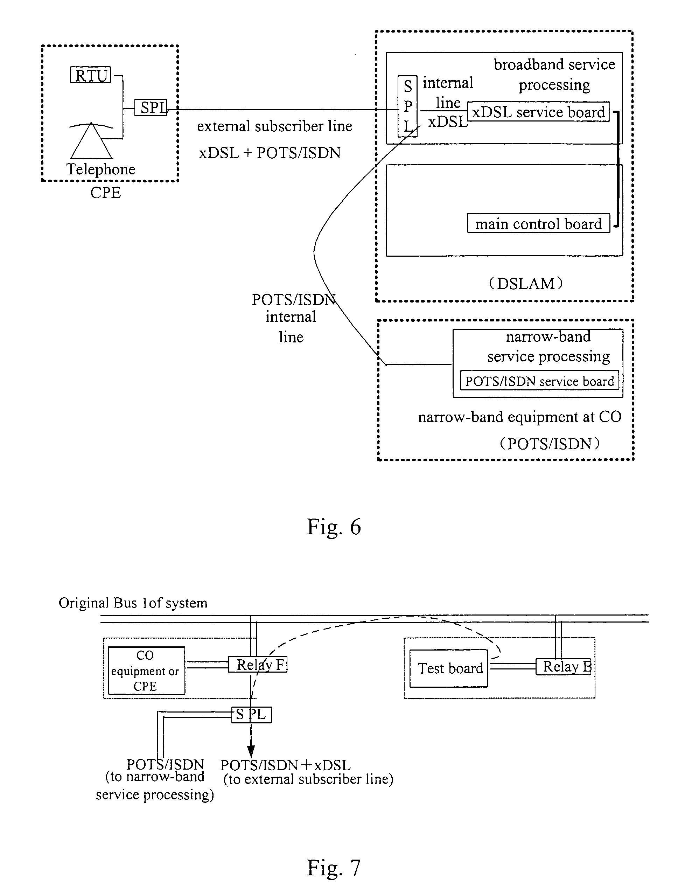

In embodiments 1 and 2, the test board is a separated single board. It can also be realized, however, as shown in Figure 6, by coordination between xDSL service board and main control board of CO. A certain port of the xDSL service board can be used to simulate CO while CPE can be accessed by the controlled switchover of relays. In this way, such tests as that of the line activation parameters of ports on the xDSL service board can be implemented. The simulating test of CPE can be realized by creating a CPE-simulating system on the xDSL service board or the main control board while the simulating tests of high-hierarchy protocols are all carried out on the main control board, and the testing principles thereof are the same as in embodiments 1 and 2.

When the test board in this invention is used to simulate CO, it may also be configured in the same way as the DSLAM unit of the simulated CO so as to replace the DSLAM unit thereof to test the activation handshake with CPE, thus deciding whether the DSLAM unit of that CO has a failure. In this case, the test board may be a pre-configured test board specially used for the DSLAM unit in the simulated CO, or may be a broadband equipment in other COs. A DSLAM unit is the smallest element which can activate a handshake process in DSLAM.

When the test board in this invention is used to simulate CPE, it may be configured in the same way as the simulated CPE so as to replace CPE to test the activation handshake with CO, thus deciding whether anything is wrong with a terminal unit in CPE. In this case, the test board may be a pre-configured test board specially used to simulate CPE, or may be other CPE.

In the implementation of this invention, it is necessary to disconnect CO from CPE in the first place before connecting the test board simulating CO with CPE or connecting the test board simulating CPE with CO. The entire process of disconnection and connection is implemented by means of relays. The following embodiments are given to describe the process of disconnecting CO from CPE before connecting the test board simulating CO with CPE or connecting the test board simulating CPE with CO.

### Embodiment 3:

As shown in Figure 7, there exists original Bus 1 in a DSL broadband service system. Under normal conditions, CO or CPE is disconnected from Bus 1 via Relay F and connected to the external subscriber line so as to connect with another CPE or CO while the test board is disconnected from Bus 1 via Relay E. In order to connect the test board simulating CO with the CPE or to connect the test board simulating CPE with the CO, Relay F and Relay E will operate respectively. Relay F disconnects the CO or CPE from the subscriber line and connects the subscriber line to Bus 1 while Relay E connects the test board to Bus 1, thus replacing the current CO or CPE, that is, the test board simulating that CO or CPE is connected with another CPE or CO.

### Embodiment 4:

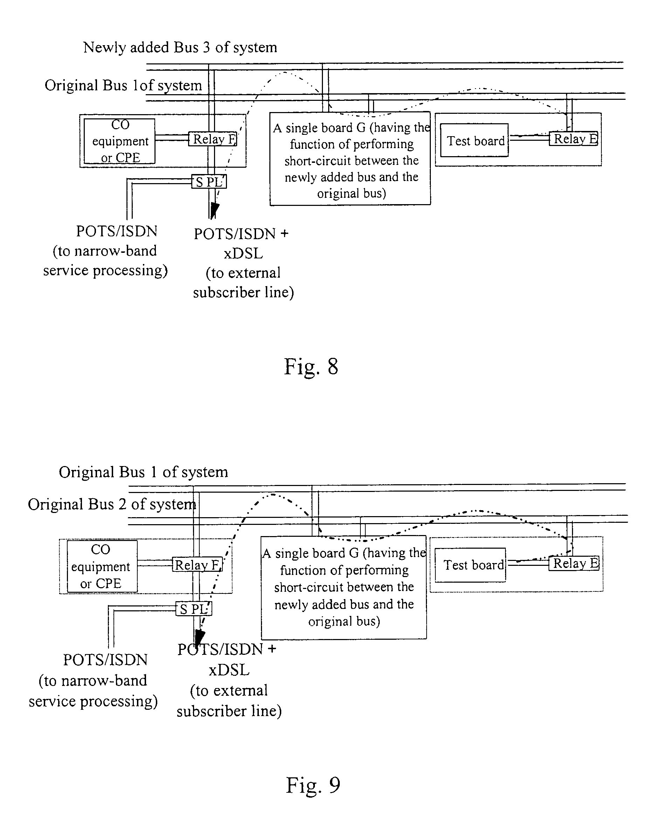

As shown in Figure 8, there exists original Bus 1 in a DSL broadband service system while new Bus 3 and a single board having the function of short-circuiting Bus 1 and Bus 3 are configured by this invention. Under normal conditions, CO or CPE disconnects from Bus 3 via Relay F and connects to the external subscriber line, accordingly connecting with another CPE or CO while the test board disconnects from Bus 1 via Relay E. In order to connect the test board simulating CO with the CPE or to connect the test board simulating CPE with the CO, Relay F and Relay E will operate respectively. Relay F disconnects the CO or CPE from the subscriber line and connects the subscriber line to Bus 3 while Relay E connects the test board to Bus 1. As the single board short-circuits Bus 1 and Bus 3, the current CO or CPE is replaced, that is, the test board simulating that CO or CPE is connected with another CPE or CO.

### Embodiment 5:

As shown in Figure 9, there exist original Buses 1 and 2 as well as a single board having the function of short-circuiting Bus 1 and Bus 2 in a DSL broadband service system. The single board short-circuits Bus 1 and Bus 2. Under normal conditions, CO or CPE disconnects from Bus 1 via Relay F and connects to the external subscriber line, accordingly connecting with another CPE or CO while the test board disconnects from Bus 2 via Relay E. In order to connect the test board simulating CO with the CPE or to connect the test board simulating CPE with the CO, Relay F and Relay E will operate respectively. Relay F disconnects the CO or CPE from the subscriber line and connects the subscriber line to Bus 1 while Relay E connects the test board to Bus 2. As the single board short-circuits Bus 1 and Bus 2, the current CO or CPE is replaced, that is, the test board simulating that CO or CPE is connected with another CPE or CO.

### Embodiment 6:

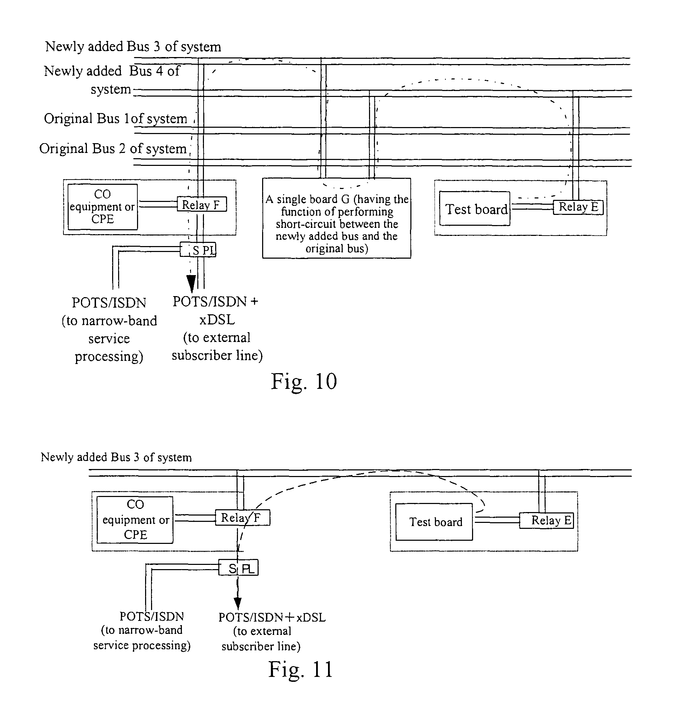

As shown in Figure 10, there exist original Bus 1 and Bus 2 in a DSL broadband service system. Bus 3 and Bus 4 as well as a single board having the function of short-circuiting between Bus 3 and Bus 4 are configured by this invention while the single board short-circuits Bus 3 and Bus 4. Under normal conditions, CO or CPE disconnects from Bus 3 via Relay F and connects to the external subscriber line, accordingly connecting with another CPE or CO while the test board disconnects from Bus 4 via Relay E. In order to connect the test board simulating CO with the CPE or to connect the test board simulating CPE with the CO, Relay F and Relay E will operate respectively. Relay F disconnects the CO or CPE from the subscriber line and connects the subscriber line to Bus 3 while Relay E connects the test board to Bus 4. As the single board short-circuits Bus 3 and Bus 4, the current CO or CPE is replaced, that is, the test board simulating that CO or CPE is connected with another CPE or CO.

### Embodiment 7:

As shown in Figure 11, Bus 3 is configured in a DSL broadband service system by this invention. Under normal conditions, CO or CPE is disconnected from Bus 3 via Relay F and connected to the external subscriber line, accordingly connecting with another CPE or CO while the test board is disconnected from Bus 3 via Relay E. In order to connect the test board simulating CO with the CPE or to connect the test board simulating CPE with the CO, Relay F and Relay E will operate respectively. Relay F disconnects the CO or CPE from the subscriber line and connects the subscriber line to Bus 3 while Relay E connects the test board to Bus 3, thus replacing the current CO or CPE, that is, the test board simulating that CO or CPE is connected with another CPE or CO.

### Embodiment 8:

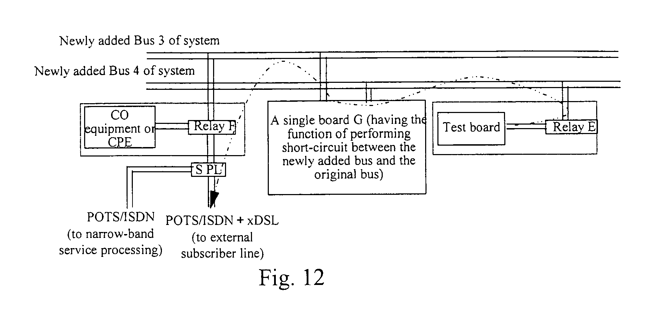

As shown in Figure 12, Bus 3 and Bus 4 as well as a single board having the function of short-circuiting Bus 3 and Bus 4 are configured by this invention while the single board short-circuits between Bus 3 and Bus 4. Under normal conditions, CO or CPE disconnects from Bus 3 via Relay F and connects to the external subscriber line, accordingly connecting with another CPE or CO while the test board disconnects from Bus 4 via Relay E. In order to connect the test board simulating CO with the CPE or to connect the test board simulating CPE with the CO, Relay F and Relay E will operate respectively. Relay F disconnects the CO or CPE from the subscriber line and connects the subscriber line to Bus 3 while Relay E connects the test board to Bus 4. As the single board short-circuits between Bus 3 and Bus 4, the current CO or CPE is replaced, that is, the test board simulating that CO or CPE is connected with another CPE or CO.

It can be appreciated that only preferred embodiments of this invention are described above and they are not to be construed as limits to the invention. Any modification, equivalent replacement or improvement without deviating from the spirit and principle of this invention should be included in the protection scope of this invention.

## Claims

1. A test method of Digital Subscriber Line (DSL) broadband service for use in tests of Central Office (CO) equipments and Customer Premises Equipments (CPE) of a DSL broadband service system, comprising:
A. disconnecting the equipment to be tested from the equipments at the other end;
B. connecting the equipment to be tested with a configured test board, simulating the other-end equipment of the equipment to be tested through the test board, and making at least one of tests of activation handshake, Asynchronous Transfer Mode (ATM) layer, and high-hierarchy protocols on the equipment to be tested.

2. A test method according to Claim 1, wherein the said test board is configured as a broadband testing system used for simulating the CPE and/or CO equipment.

3. A test method according to Claim 1, wherein the said test board is configured as a Digital Subscriber Line Access Multiplexer (DSLAM) unit which is independence or part of a CO equipment.

4. A test method according to Claim 1, wherein the said test board is configured as the CPE which is independence or part of the said CPE.

5. A test method according to Claim 1, wherein, when the said equipment to be tested is the CPE, the said test of activation handshake in step B comprises:
B11. setting activation parameters in the test board, and initiating a handshake request with the equipment to be tested;
B12. the tested equipment and the test board operating each other, both entering a state of activation when mutually recognized standards for activation parameters are met, acquiring actual activation parameters, and verifying whether an activation function and related parameters of the tested equipment are normal.

6. A test method according to Claim 1, wherein, when the said equipment to be tested is a CO equipment, the said test of activation handshake in step B comprises:
B21. setting activation parameters in the test board, and initiating a handshake request with the test board;
B22. the tested equipment and the test board operating each other, both entering a state of activation when mutually recognized standards for activation parameters are met, acquiring actual activation parameters, and verifying whether an activation function and related parameters of the tested equipment are normal.

7. A test method according to Claim 1, wherein, when the said equipment to be tested is the CPE, the said test of ATM layer in step B comprises:
B31. looping back a permanent virtual channel (PVC) or permanent virtual path (PVP) to be tested in the DSL broadband service system;
B32. the tested equipment sending, by itself or controlled by the test board via an embedded operation channel (EOC), an ATM cell based on PVC or PVP;
B33. the tested equipment deciding whether the channel between a loop-back point and the CPE is normal according to whether the tested equipment receives the ATM cell it has sent.

8. A test method according to Claim 1, wherein, when the said equipment to be tested is the CPE, the said test of ATM layer in step B comprises:
B41. the test board sending to an upper level network in the DSL broadband service system a constructed ATM cell, which the upper level network loops back;
B42. the test board receiving the ATM cell being looped back via the upper level network;
B43. the test board deciding whether a channel between a loop-back point and the test board is normal based on whether it receives the cell being looped back.

9. A test method according to Claim 1, wherein the said test of high-hierarchy protocols in step B comprises: performing at least one of the tests of ATM layer encapsulation protocol, and/or dynamic host configuration protocol (DHCP), and/or the tested equipment supporting point-to-point protocol, Ping initiated by the tested equipment, Ping initiated by the test board, and file transfer protocol (FTP).

10. A test method according to Claim 9, wherein the said test of ATM layer encapsulation protocol comprises,
B511. the test board constructing an IP message or a message of the media access control (MAC) layer and sending the message to the tested equipment via an embedded operation channel (EOC);
B512. the tested equipment checking whether it has received the message, if it has received the message, reporting the message to the test board via a management system of the tested equipment;
B513. the test board comparing the message sent with the message received, deciding whether the message has been sent normally and whether the content is correct to decide whether configuration and function of the encapsulation protocol of the tested equipment are correct.

11. A test method according to Claim 9, wherein, when the said tested equipment is the CPE, the test of DHCP comprises,
B621. the tested equipment, controlled by a management system of the CPE, initiating to the test board a DHCP request;
B622. the test board assigning an IP address for the tested equipment and checking whether what the tested equipment reports is the obtained IP address to decide whether configuration and function of DHCP are correct.

12. A test method according to Claim 9, wherein, when the said tested equipment is the CO equipment, the test of DHCP comprises,
B721. the test board initiating to the tested equipment a DHCP request;
B722. the tested equipment assigning an IP address for the test board, and the test board checking whether what the test board reports by itself is the obtained IP address to decide whether configuration and function of DHCP are correct.

13. A test method according to Claim 9, wherein the said test of tested equipment supporting point-to-point protocol comprises, a test of tested equipment supporting point-to-point protocol over ATM (PPPOA) and/or test of tested equipment supporting point-to-point protocol over Ethernet (PPPOE).

14. A test method according to Claim 13, wherein, when the said tested equipment is CPE, the said test of tested equipment supporting point-to-point protocol comprises,
B831. configuring the test board as a server supporting point-to-point protocol, and configuring the tested equipment as a client supporting point-to-point protocol;
B832. the tested equipment accessing the test board by dialing in the mode of point-to-point protocol;
B833. the test board monitoring each process at the server as well as each process at the client;
B834. the test board deciding whether configuration and function of point-to-point protocol are correct by checking various states of the server and client.

15. A test method according to Claim 13, wherein, when the said tested equipment is a CO equipment, the said test of tested equipment supporting point-to-point protocol comprises,
B931.configuring the tested equipment as a server supporting point-to-point protocol, and configuring the test board as a client supporting point-to-point protocol;
B932. the test board accessing the tested equipment by dialing in the mode of point-to-point protocol;
B933. the tested equipment monitoring each process at the server as well as each process at the client and reporting the monitored states to the test board;
B934. the test board deciding whether configuration and function of point-to-point protocol are correct by checking various states of the server and client.

16. A test method according to Claim 9, wherein, when the said tested equipment is the CPE, the said test of initiated Ping comprises,
B1041. the tested equipment obtaining an IP address;
B1042. the test board issuing via an embedded operation channel IP parameters to the tested equipment;
B1043. the tested equipment performing a Ping test of the test board based on the IP parameters and sending test results to the test board, which decides whether the IP layer is normal according to the test results.

17. A test method according to Claim 9, wherein, when the said tested equipment is a CO equipment, the said test of initiated Ping comprises,
B1141. the test board being configured with an IP address;
B1142. the tested equipment issuing via an embedded operation channel IP parameters to the test board;
B1143. the test board performing a Ping test of the tested equipment based on the IP parameters and obtaining test results, by which the test board decides whether the IP layer is normal.

18. A test method according to Claim 9, wherein, when the tested equipment is the CPE, the said test of FTP comprises,
B1251. the tested equipment obtaining an IP address;
B1252. the test board simulating an FTP server to issue an IP address and FTP parameters to the tested equipment;
B1253. the tested equipment uploading and downloading files via the simulated server;
B1254. the test board obtaining uploading and downloading rates in the simulating test and comparing them with actually activated rates to decide whether service bandwidth of the subscriber is normal.

19. A test method according to Claim 9, wherein, when the tested equipment is the CO equipment, the said test of FTP comprises,
B1351. the test board being configured with an IP address;
B1352. the tested equipment simulating an FTP server to issue an IP address and FTP parameters to the test board;
B1353. the test board uploading and downloading files via the simulated server;
B1354. the test board obtaining uploading and downloading rates in the simulating test and comparing them with the actually activated rates to decide whether service bandwidth of the subscriber is normal.

20. A test method according to Claim 1, wherein the said disconnecting the equipment to be tested from the equipments at the other end in step A comprises, disconnecting from a relay in the equipments at the other end through a relay in the tested equipment; and
the said connecting the equipment to be tested with a configured test board in step B comprises, connecting a relay in the equipment to be tested with a relay on the configured test board.

21. A test method according to Claim 20, wherein the said connecting the relay in the equipment to be tested with the relay on the configured test board comprises, the relay in the equipment to be tested and the relay on the test board connecting the equipment to be tested and the test board with a first bus, respectively.

22. A test method according to Claim 21, wherein the said first bus is an original bus.

23. A test method according to Claim 20, wherein the said connecting the relay in the equipment to be tested with the relay on the configured test board comprises, connecting the equipment to be tested with a first bus through the relay in the equipment to be tested, connecting the test board with a second bus through the relay on the test board, and short-circuiting between the first and second buses.

24. A test method according to Claim 23, wherein the said first bus is an original bus, and the said second bus is a new one currently configured.

25. A test method according to Claim 1, wherein the said test board is configured to connect with a port of the xDSL board, and the test board and the port of the xDSL board jointly simulate CO or CPE equipment.
